# EUROPÄISCHE PATENTANMELDUNG

(11) **EP 1 297 987 A1**
(43) Veröffentlichungstag der Anmeldung: **02.04.2003**
(21) Anmeldenummer: 01123119.8
(22) Anmeldetag: 27.09.2001
(51) Int. Cl.: B60K 26/02

(54) **Motorsteuerung für ein Kraftfahrzeug mit Handschaltgetriebe**

(71) Anmelder: Ford Global Technologies, Inc., A subsidiary of Ford Motor Company, Dearborn, Michigan 48126 (US)
(72) Erfinder: Grieser, Klemens, 40764 Langenfled (DE)
(74) Vertreter: Drömer, Hans-Carsten, Dipl.-Ing.

(57) **Zusammenfassung**

Die Erfindung betrifft eine Motorsteuerung für ein Kraftfahrzeug mit einem (Otto-)motor und einem Handschaltgetriebe, wobei das Gaspedal mit einem Knickpunkt (K1, K2, K3) im Verlauf der Rückstellkraft gegenüber der Pedalposition ausgestattet wird. Wenn sich das Gaspedal im Bereich vor dem Knickpunkt befindet, wird der Motor in einem ersten Betriebsmodus betrieben, zum Beispiel mit einem stöchiometrischen Luft-Kraftstoff-Verhältnis. Nach Überschreiten des Knickpunktes wird von der Motorsteuerung ein Übergang in einen zweiten Betriebsmodus freigegeben, z. B. ein Betrieb mit einem fetten Luft-Kraftstoff-Verhältnis. Bei Bereitstellung von zwei Knickpunkten (K2, K3) im Kraftverlauf (II) des Gaspedals kann entsprechend zwischen drei Betriebsmodi differenziert werden, zum Beispiel zwischen einem stöchiometrischen Betrieb mit oder ohne vollständig geöffneter Drosselklappe sowie einem fetten Betrieb.

## Beschreibung

Die Erfindung betrifft eine Motorsteuerung für ein Kraftfahrzeug mit einer Brennkraftmaschine, vorzugsweise einem Ottomotor, und mit einem Handschaltgetriebe, enthaltend ein vom Fahrer zu betätigendes Gaspedal mit mindestens einem Knickpunkt im Verlauf der Rückstellkraft gegenüber dem Pedalweg, wobei die Motorsteuerung dahingehend ausgebildet ist, die Brennkraftmaschine in mindestens zwei verschiedenen Betriebsmodi zu betreiben. Ferner betrifft die Erfindung ein Verfahren zur Steuerung einer Brennkraftmaschine, insbesondere eines Ottomotors, in einem Kraftfahrzeug mit Handschaltgetriebe.

In Kraftfahrzeugen mit einer Brennkraftmaschine mit Funkenzündung (Ottomotor) wird die Leistungsabgabe des Motors in der Regel über ein Gaspedal vom Fahrer gesteuert. Das Gaspedal läßt sich ausgehend von einer Ruheposition gegen eine Rückstellkraft verschieden weit vorschieben, wobei die angeforderte Leistung proportional zum zurückgelegten Pedalweg zunimmt. Der zurückgelegte Pedalweg des Gaspedals wird gemessen und einer Motorsteuerung mitgeteilt, welche durch Einstellung entsprechender Parameter - wie etwa der pro Arbeitstakt zugeführten Kraftstoffmenge - die Zielvorgabe des Fahrers zu erreichen versucht. Ferner kann die Motorsteuerung zwischen verschiedenen Betriebsmodi des Ottomotors umschalten, insbesondere zwischen Betriebsmodi mit magerem, mit stöchiometrischem und/oder mit fettem Luft-Kraftstoff-Gemisch.

Der Zusammenhang zwischen dem zurückgelegten Pedalweg eines Gaspedals und der erzeugten Rückstellkraft ist in der Regel stetig und ohne Knicke. Aus der GB 2 339 841 A ist jedoch auch ein Gaspedal bekannt, bei welchem der Verlauf der Rückstellkraft gegenüber dem zurückgelegten Pedalweg einen Knickpunkt aufweist. Das heißt, daß der Anstieg der Rückstellkraft vor dem Knickpunkt weniger steil als hinter dem Knickpunkt verläuft und/oder daß die Rückstellkraft am Knickpunkt sprunghaft zunimmt. Mechanisch wird dieses Verhalten dadurch erzeugt, daß das Gaspedal bei der Position des Knickpunktes an eine zweite (gegebenenfalls vorgespannte) Rückstellfeder anstößt, welche bei einer weiteren Bewegung des Gaspedals eine zusätzliche Rückstellkraft erzeugt. Der beim Betätigen des Gaspedals wahrnehmbare Knickpunkt dient gemäß der GB 2 339 841 A dazu, ein vom Fahrer vorgegebenes Geschwindigkeitsmaximum besser einhalten zu können. Dies geschieht dadurch, daß die Motorsteuerung eine Bewegung des Gaspedals zwischen der Ruheposition und dem Knickpunkt auf den Geschwindigkeitsbereich vom Stillstand bis zur maximalen vorgegebenen Geschwindigkeit abbildet, und daß über der vorgegebenen maximalen Geschwindigkeit liegende Geschwindigkeiten nur dann angesteuert werden, wenn der Fahrer das Gaspedal über den Knickpunkt hinaus durchtritt.

Des weiteren ist es von Fahrzeugen mit Automatikgetriebe bekannt, gegen Ende des Pedalweges einen Knickpunkt im Verlauf der Rückstellkraft vorzusehen, um hierdurch ein sogenanntes Kick-down Verhalten zu erzeugen, bei welchem der Motor maximale Leistung erbringt und das Automatikgetriebe in einen möglichst kleinen Gang heruntergeschaltet wird.

Vor diesem Hintergrund war es Aufgabe der vorliegenden Erfindung, eine Motorsteuerung und ein Verfahren bereitzustellen, bei welcher bzw. bei welchem der Fahrer eines Kraftfahrzeuges mit Handschaltgetriebe eine verbesserte Kontrolle über den Motor ausüben kann.

Diese Aufgabe wird durch eine Motorsteuerung mit den Merkmalen des Anspruchs 1 sowie durch ein Verfahren mit den Merkmalen des Anspruchs 8 gelöst. Vorteilhafte Ausgestaltungen sind in den Unteransprüchen enthalten.

Die erfindungsgemäße Motorsteuerung für ein Kraftfahrzeug mit einer Brennkraftmaschine, insbesondere einem Ottomotor, und mit einem Handschaltgetriebe enthält ein vom Fahrer zu betätigendes Gaspedal, das mindestens einen Knickpunkt im Verlauf der Rückstellkraft gegenüber dem Pedalweg aufweist. Am Knickpunkt ändert sich definitionsgemäß der Verlauf der Rückstellkraft sprunghaft und/oder dieser weist dort verschiedene linksseitige und rechtsseitige Ableitungen, d.h. verschiedene Steilheiten, auf. Insbesondere kann die Rückstellkraft aus Richtung der Ruheposition gesehen vor dem Knickpunkt weniger steil ansteigen als hinter dem Knickpunkt. Die Motorsteuerung ist ferner derart ausgebildet, daß diese die Brennkraftmaschine in mindestens zwei verschiedenen Betriebsmodi betreiben kann. Dabei ist die Motorsteuerung dadurch gekennzeichnet, daß bei einer Stellung des Gaspedals zwischen der Ruheposition und dem Knickpunkt nur der erste Betriebsmodus angenommen wird. Der Begriff "Betriebsmodus" ist hierbei und im Folgenden in einem weiten Sinne zu verstehen und kann insbesondere auch mehrere verschiedene spezielle Betriebsarten des Kraftfahrzeuges beinhalten.

Durch die beschriebene Motorsteuerung erhält der Fahrer einen größeren Einfluß auf das Verhalten des Motors, da er durch die Stellung des Gaspedals selbst beeinflussen kann, ob der Motor nur im ersten oder je nach Umständen auch im zweiten Betriebsmodus betrieben wird. Die Differenzierung zwischen diesen Betriebsmodi wird dem Fahrer durch den Knickpunkt im Verlauf der Rückstellkraft des Gaspedals ermöglicht, da er diesen Knickpunkt beim Betätigen des Gaspedals spüren kann, ohne daß dies jedoch störend wirkt. Vielmehr liefert das Erreichen des Knickpunktes dem Fahrer nur die Information, daß bei einem weiteren Durchtreten des Gaspedals der Motorsteuerung die Möglichkeit eröffnet wird, bei Bedarf in den zweiten Betriebsmodus umzuschalten. Will der Fahrer dieses Umschalten in den zweiten Betriebsmodus verhindern, so kann er ein weiteres Durchtreten des Gaspedals unterlassen und seine Steuerung allein im Bereich vor dem Knickpunkt ausüben. Gegebenenfalls kann die Motorsteuerung auch derart ausgebildet sein, daß jenseits des Knickpunktes nur der zweite Betriebsmodus angenommen werden kann.

Welche Betriebsmodi die Motorsteuerung diesseits und jenseits des Knickpunktes des Gaspedals annehmen kann, hängt von den Bedingungen des jeweiligen Kraftfahrzeuges ab. Insbesondere kann der erste Betriebsmodus, welcher vor dem Knickpunkt angenommen wird, einen Motorbetrieb mit einem stöchiometrischen Luft-Kraftstoff-Verhältnis beinhalten. Der Betrieb des Motors in einem stöchiometrischen Zustand weist den Vorteil auf, daß der Kraftstoffverbrauch verhältnismäßig gering gehalten wird. Ferner treten verringerte Schadstoffemissionen auf, da ein in der Regel im Abgassystem des Motors vorgesehener Dreiwegekatalysator bei stöchiometrischem Luft-Kraftstoff-Verhältnis erheblich wirksamer ist als bei hiervon abweichenden Verhältnissen.

Der zweite Betriebsmodus, welcher nur jenseits des Knickpunktes angenommen werden kann, kann insbesondere ein Motorbetrieb mit einem fetten Luft-Kraftstoff-Verhältnis sein. Ein fettes Luft-Kraftstoff-Verhältnis dient der Vollastanreicherung des Motors zur Erzeugung einer höheren Motorleistung. Die höhere Leistung wird dabei, wie bereits erläutert, durch einen höheren Kraftstoffverbrauch und durch höhere Emissionen erkauft. Durch die Begrenzung eines derartigen zweiten, fetten Betriebsmodus auf den Betätigungsbereich des Gaspedals jenseits des Knickpunktes wird es dem Fahrer ermöglicht, die Nachteile eines derartigen Motorbetriebes zu vermeiden, wenn er nicht unbedingt eine höhere Motorleistung benötigt.

Gemäß einer Weiterbildung der Motorsteuerung weist das Gaspedal zwei Knickpunkte im Verlauf der Rückstellkraft gegenüber dem Pedalweg auf. Das heißt, daß die Rückstellkraft von der Ruheposition des Gaspedals aus gesehen hinter dem ersten Knickpunkt steiler verläuft als vor dem ersten Knickpunkt und/oder daß diese dort einen ersten Sprung aufweist, und daß die Rückstellkraft von der Ruheposition des Gaspedals aus gesehen hinter dem zweiten Knickpunkt steiler verläuft als vor dem zweiten Knickpunkt und/oder daß diese dort einen zweiten Sprung aufweist. Ferner ist die Motorsteuerung dahingehend ausgebildet, die Brennkraftmaschine in mindestens drei verschiedenen Betriebsmodi zu betreiben, wobei bei einer Stellung des Gaspedals vor dem ersten Knickpunkt nur der erste Betriebsmodus, und bei einer Stellung des Gaspedals vor dem zweiten Knickpunkt nur der erste oder zweite Betriebsmodus angenommen werden. Der dritte Betriebsmodus tritt daher allenfalls jenseits des zweiten Knickpunktes auf. Vorzugsweise ist der erste Betriebsmodus auf die Position des Gaspedals vor dem ersten Knickpunkt und/oder der zweite Betriebsmodus auf die Position des Gaspedals zwischen dem ersten Knickpunkt und dem zweiten Knickpunkt beschränkt. Bei einer derartigen Motorsteuerung besitzt der Fahrer somit eine noch weitergehende Kontrolle über das Verhalten seines Kraftfahrzeuges, da er je nach Stellung des Gaspedals einen Übergang in den zweiten bzw. dritten Betriebsmodus der Motorsteuerung erlauben kann oder nicht. Der Übergang zwischen den Zulässigkeitsbereichen für die Betriebsmodi wird dabei durch die Knickpunkte im Verlauf der Rückstellkräfte für den Fahrer gut wahrnehmbar.

Bei der zuletzt erläuterten Ausgestaltung der Motorsteuerung mit drei Betriebsmodi kann der erste Betriebsmodus insbesondere ein Motorbetrieb mit einem stöchiometrischen Luft-Kraftstoff-Verhältnis sein, wobei die Drosselklappe in der Luftzufuhr zum Motor zumindest teilweise geschlossen ist. Das teilweise Schließen der Drosselklappe bedingt eine Begrenzung der Motorleistung und damit des Kraftstoffverbrauchs. Durch eine Beschränkung auf den ersten Betriebsmodus kann der Fahrer somit sicherstellen, daß ein besonders ökonomischer Betrieb des Kraftfahrzeuges erfolgt.

Der zweite Betriebsmodus einer Motorsteuerung mit drei Betriebsmodi kann insbesondere der Motorbetrieb mit einem stöchiometrischen Luft-Kraftstoff-Verhältnis bei vollständig geöffneter Drosselklappe sein. Die vollständige Öffnung der Drosselklappe bewirkt, daß der Motor die im stöchiometrischen Betrieb maximale Leistung erzeugt. Durch Beibehaltung der Stöchiometrie wird jedoch gleichzeitig ein verhältnismäßig kraftstoffsparender Betrieb und eine Minimierung der schädlichen Emissionen sichergestellt. Der Fahrer kann die gezielte Annahme bzw. Freigabe eines derartigen zweiten Betriebsmodus somit verwenden, um bei verhältnismäßig guter Kraftstoffausnutzung und bei geringen Emissionen eine hohe Motorleistung zu erzielen.

Weiterhin kann bei einer Motorsteuerung mit drei Betriebsmodi der dritte Betriebsmodus den Motorbetrieb mit einem fetten Luft-Kraftstoff-Verhältnis beinhalten. Eine derartige Anreicherung des Luft-Kraftstoff-Gemisches führt dazu, daß der Motor seine maximale Leistung abgibt. Der Fahrer kann dabei einen solchen, hinsichtlich der Kraftstoffausnutzung und der Emissionen ungünstigen Betriebsmodus gezielt auf die Fälle beschränken, in denen er die maximale Motorleistung unbedingt benötigt.

Die Erfindung betrifft ferner ein Verfahren zur Steuerung einer Brennkraftmaschine wie insbesondere eines Ottomotors in einem Kraftfahrzeug mit Handschaltgetriebe. Bei dem Verfahren wird die Brennkraftmaschine nur in einem ersten Betriebsmodus betrieben, wenn sich das Gaspedal des Kraftfahrzeuges von der Ruheposition aus gesehen vor einer vorbestimmten, vom Fahrer wahrnehmbaren Position befindet, und die Brennkraftmaschine wird optional weiterhin in einem zweiten Betriebsmodus betrieben, wenn sich das Gaspedal von der Ruheposition aus gesehen jenseits der genannten vorbestimmten Position befindet. Bei dem erfindungsgemäßen Verfahren kann der Fahrer somit nicht nur Einfluß auf die vom Motor abgegebene Leistung nehmen, sondern gleichzeitig auch auf den Betriebsmodus, unter welchem diese Leistung erzeugt wird. Wenn der Fahrer die Auswahl des zweiten Betriebsmodus durch die Motorsteuerung nicht zulassen möchte, kann er sich bei der Betätigung des Gaspedals auf den Bereich vor der vorbestimmten Position beschränken.

Bei einer Weiterbildung des Verfahrens wird an der vorbestimmten Position des Gaspedals ein Sprung und/oder jenseits der vorbestimmten Position des Gaspedals ein steilerer Anstieg der Rückstellkraft gegenüber dem Pedalweg erzeugt als diesseits der vorbestimmten Position. Das heißt, daß der Verlauf der Rückstellkraft gegenüber dem Pedalweg einen Knickpunkt an der vorbestimmten Position aufweist, welcher für den Fahrer bei der Betätigung des Gaspedals spürbar ist, ihn jedoch in keiner Weise stört.

Der erste Betriebsmodus der Brennkraftmaschine kann dadurch gekennzeichnet sein, daß in diesem ein stöchiometrisches Luft-Kraftstoff-Verhältnis verwendet wird, während im zweiten Betriebsmodus vorzugsweise ein fettes Luft-Kraftstoff-Verhältnis angewendet wird. Ein stöchiometrisches Verhältnis führt zwar zu etwas geringeren Motorleistungen, hat jedoch den Vorteil besserer Kraftstoffausnutzung und geringerer Emissionen.

Das erläuterte Verfahren schließt auch das Vorhandensein mehrerer vorbestimmter Positionen der erläuterten Art ein.

Im Folgenden wird die Erfindung anhand der Figuren beispielhaft näher erläutert.
Es zeigen:
- Figur 1: zwei beispielhafte Verläufe der Rückstellkraft gegenüber der Position eines Gaspedals und
- Figur 2: Drehmoment und Leistung eines Ottomotors in Abhängigkeit von der Motordrehzahl für verschiedene Luft-Kraftstoff-Verhältnisse.

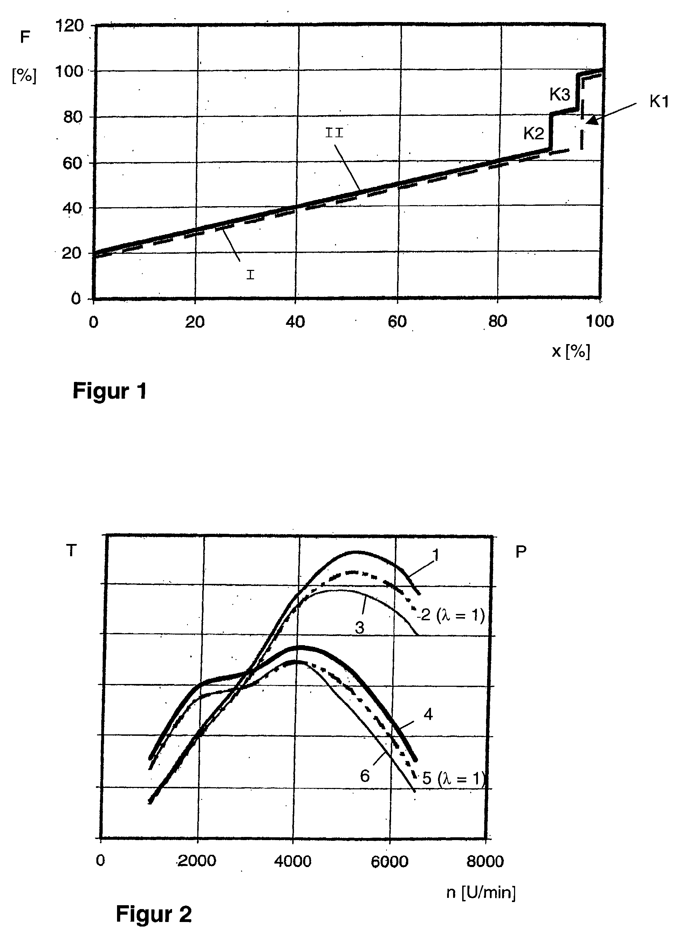

Gemäß einer bevorzugten Ausgestaltung der vorliegenden Erfindung wird in einem Kraftfahrzeug mit Handschaltgetriebe die Rückstellkraft, welche auf das Gaspedal wirkt, mit mindestens einem Knickpunkt oder "Druckpunkt" versehen. Figur 1 zeigt diesbezüglich zwei beispielhafte Verläufe der Rückstellkraft F gegenüber der Pedalposition x (jeweils gemessen in Prozent des zugrundeliegenden Wertebereiches).

In dem gestrichelt gezeichneten Verlauf I ist gegen Ende der Pedalposition, d.h. bei ca. 95 % des Pedalweges x, ein Knickpunkt K1 mit einem Sprung der Rückstellkraft F vorgesehen. Vor dem Knickpunkt K1 steigt die Rückstellkraft F linear mit einer bestimmten Steigung an, und am Knickpunkt K1 vollzieht diese einen Sprung, um anschließend mit etwa derselben Steigung weiter bis auf 100 % anzusteigen.

Bei dem mit der durchgezogenen Kurve II dargestellten Verlauf sind zwei Knick- bzw. Sprungpunkte K2, K3 vorgesehen, wobei der erste Punkt K2 bei ca. 90 % des Pedalweges x und der zweite Punkt K3 bei ca. 95 % des Pedalweges x liegt.

Selbstverständlich können auch andere Verläufe als die in Figur 1 dargestellten vorgesehen werden, insbesondere auch solche, bei denen an den Knickpunkten kein Sprung, sondern ein Wechsel der Steilheit der Rückstellkraft F vorliegt.

Die durch die Knickpunkte vorbestimmten Pedalpositionen können dazu verwendet werden, dem Fahrer eine größere Kontrollmöglichkeit über den Motorbetrieb zu geben. Insbesondere kann das Überschreiten eines Knickpunktes bedeuten, daß eine bestimmte Funktion der Motorsteuerung gezielt ausgelöst bzw. verhindert wird.

Bei einer derartigen auszulösenden bzw. zu verhindernden Funktion der Motorsteuerung kann es sich insbesondere um die Vollastanreicherung eines Ottomotors handeln. Die Vollastanreicherung bedeutet, das der Ottomotor mit einem fetten Luft-Kraftstoff-Verhältnis λ < 1 betrieben wird. Durch die Vollastanreicherung erhöht sich der Kraftstoffverbrauch, und die Emissionen des Kraftfahrzeuges nehmen zu, da die Emissionsreduzierung über einen Dreiwegekatalysator im angefetteten Betrieb weniger wirksam ist als bei einem stöchiometrischen Luft-Kraftstoff-Verhältnis.

Die Abhängigkeit des Motordrehmoments T und der Motorleistung *P* vom Luft-Kraftstoff-Verhältnis λ ist in Figur 2 dargestellt. Die linke vertikale Achse sowie die Kurven 1, 2 und 3 stellen dabei das vom Motor erzeugte Drehmoment *T* dar, während die rechte vertikale Achse und die Kurven 4, 5 und 6 die Motorleistung *P* wiedergeben. Auf der horizontalen Achse ist die jeweilige Drehzahl *n* des Motors in U/min aufgetragen.

Die gestrichelten Kurven 2 bzw. 5 entsprechen einem Betrieb mit einem stöchiometrischen Luft-Kraftstoff-Verhältnis (λ = 1), während die jeweils oberen Kurven 1 bzw. 4 einem Betrieb mit einem fetten Luft-Kraftstoff-Verhältnis (λ < 1) entsprechen. Die jeweils unteren Kurven 3 bzw. 6 entsprechen einem besonders kraftstoffsparenden Betrieb mit gedrosselter Luftzufuhr.

Wie aus den Kurvenverläufen 1 - 6 hervorgeht, ist der Gewinn an Drehmoment bzw. Leistung bei einem Übergang von einem stöchiometrischen zu einem fetten Luft-Kraftstoff-Verhältnis relativ gering, so daß ein Fahrer bei einer Beschränkung auf einen stöchiometrischen Motorbetrieb nur auf wenig Leistung verzichten muß.

Eine andere Funktion, welche bei einem Ottomotor mit einer elektrischen Drosselklappe an den Knickpunkt im Weg des Gaspedals gekoppelt werden kann, ist eine Begrenzung der maximalen Motorleistung zur Kraftstoffeinsparung. Auf diese Weise läßt sich ein sog. "Ökomodus" realisieren. In vorteilhafter Weise wird dabei ein zweifach gestufter Verlauf der Rückstellkraft des Gaspedals entsprechend Kurve II von Figur 1 verwendet. Bei Überwindung der ersten Stufe K2 wird die Drosselklappe unter Beibehaltung des stöchiometrischen Betriebes (λ = 1) voll geöffnet, was in Figur 2 einem Übergang von den Kurven 3 bzw. 6 zu den Kurven 2 bzw. 5 entspricht. Bei einem Überwinden des zweiten Knickpunktes K3 wird dann zusätzlich das Luft-Kraftstoff-Gemisch leistungsoptimal eingestellt, was in Figur 2 einem Übergang von den Kurven 2 bzw. 5 auf die Kurven 1 bzw. 4 entspricht.

## Patentansprüche

1. Motorsteuerung für ein Kraftfahrzeug mit einer Brennkraftmaschine, vorzugsweise einem Ottomotor, und mit einem Handschaltgetriebe, enthaltend ein von dem Fahrer des Kraftfahrzeugs zu betätigendes Gaspedal mit mindestens einem Knickpunkt im Verlauf der Rückstellkraft gegenüber dem Pedalweg, wobei die Motorsteuerung dahingehend eingerichtet ist, die Brennkraftmaschine in mindestens zwei verschiedenen Betriebsmodi zu betreiben,
**dadurch gekennzeichnet, daß**
bei einer Stellung des Gaspedals zwischen seiner Ruheposition und dem Knickpunkt nur der erste Betriebsmodus angenommen wird.

2. Motorsteuerung nach Anspruch 1,
**dadurch gekennzeichnet, daß**
der erste Betriebsmodus einen Motorbetrieb mit einem stöchiometrischen Luft-Kraftstoff-Verhältnis umfasst.

3. Motorsteuerung nach Anspruch 1 oder 2,
**dadurch gekennzeichnet, daß**
der zweite Betriebsmodus einen Motorbetrieb mit einem fetten Luft-Kraftstoff-Verhältnis umfasst.

4. Motorsteuerung nach einem der Ansprüche 1 bis 3,
**dadurch gekennzeichnet, daß**
das Gaspedal zwei Knickpunkte im Verlauf der Rückstellkraft gegenüber dem Pedalweg aufweist, und dass die Motorsteuerung dahingehend ausgebildet ist, die Brennkraftmaschine in mindestens drei verschiedenen Betriebsmodi zu betreiben, wobei in einer Stellung des Gaspedals vor dem ersten Knickpunkt nur der erste Betriebsmodus und in einer Stellung des Gaspedals vor dem zweiten Knickpunkt nur der erste oder der zweite Betriebsmodus angenommen wird.

5. Motorsteuerung nach Anspruch 4,
**dadurch gekennzeichnet, daß**
der erste Betriebsmodus einen Motorbetrieb mit einem stöchiometrischen Luft-Kraftstoff-Verhältnis bei zumindest teilweise geschlossener Drosselklappe umfasst.

6. Motorsteuerung nach Anspruch 4 oder 5,
**dadurch gekennzeichnet, daß**
der zweite Betriebsmodus einen Motorbetrieb mit einem stöchiometrischen Luft-Kraftstoff-Verhältnis bei vollständig geöffneter Drosselklappe umfasst.

7. Motorsteuerung nach einem der Ansprüche 4 bis 6,
**dadurch gekennzeichnet, daß**
der dritte Betriebsmodus einen Motorbetrieb mit einem fetten Luft-Kraftstoff-Verhältnis umfasst.

8. Verfahren zur Steuerung einer Brennkraftmaschine, vorzugsweise eines Ottomotors, in einem Kraftfahrzeug mit Handschaltgetriebe,
**dadurch gekennzeichnet, daß**
die Brennkraftmaschine nur in einem ersten Betriebsmodus betrieben wird, wenn sich das Gaspedal vor einer vorbestimmten, vom Fahrer wahrnehmbaren Position befindet, und dass die Brennkraftmaschine in einem zweiten Betriebsmodus betrieben werden kann, wenn sich das Gaspedal jenseits der vorbestimmten Position befindet.

9. Verfahren nach Anspruch 8,
**dadurch gekennzeichnet, daß**
jenseits der vorbestimmten Position des Gaspedals ein steilerer Anstieg der Rückstellkraft gegenüber dem Pedalweg und/oder ein Sprung in der Rückstellkraft vorgesehen ist.

10. Verfahren nach Anspruch 8 oder 9,
**dadurch gekennzeichnet, daß**
die Brennkraftmaschine im ersten Betriebsmodus mit einem stöchiometrischen und im zweiten Betriebsmodus mit einem fetten Luft-Kraftstoff-Verhältnis betrieben wird.
